# EUROPÄISCHE PATENTSCHRIFT

(11) **EP 3 487 741 B1**
(45) Veröffentlichungstag und Bekanntmachung des Hinweises auf die Patenterteilung: **30.09.2020**
(21) Anmeldenummer: 17735427.1
(22) Anmeldetag: 26.06.2017
(51) Int. Cl.: B61C 15/10

(54) **SANDSTREUANLAGE UND SCHIENENFAHRZEUG MIT EINER SOLCHEN SANDSTREUANLAGE**
SAND SPREADING SYSTEM AND RAIL VEHICLE WITH SUCH A SAND SPREADING SYSTEM
SABLIÈRE ET VÉHICULE FERROVIAIRE ÉQUIPÉ D'UNE TELLE SABLIÈRE

(30) Priorität: 25.08.2016 DE 102016216018
(43) Veröffentlichungstag der Anmeldung: 29.05.2019
(73) Patentinhaber: Siemens Mobility GmbH, 81739 München (DE)
(72) Erfinder: GRONAU, Hans-Joachim, 85256 Vierkirchen (DE); STELZLE, Wilfried, 85253 Kleinberghofen (DE)
(86) Internationale Anmeldenummer: PCT/EP2017/065661
(87) Internationale Veröffentlichungsnummer: WO 2018/036690

(56) Entgegenhaltungen:
- EP-A2- 0 499 199
- WO-A1-2004/080778
- WO-A1-2016/134397
- WO-A2-2015/044243
- DE-A1- 2 938 583
- DE-A1- 4 202 413
- DE-A1- 10 305 551
- DE-U1-202013 000 635

## Beschreibung

Die Erfindung bezieht sich auf eine Sandstreuanlage nach dem Oberbegriff des Patentanspruches 1 sowie auf ein mit einer solchen Sandstreuanlage ausgerüstetes Schienenfahrzeug.

Eine Sandstreuanlage mit den Merkmalen gemäß dem Oberbegriff des Patentanspruchs 1 ist aus der Druckschrift DD 220 863 A1 bekannt.

Derartige Sandstreuanlagen für Schienenfahrzeug umfassen einen Sandkasten zur Bevorratung von Streusand, eine am Sandkasten befestigte Sandtreppe zur druckluftgesteuerten Dosierung des Streusandaustritts, und ein über einen Sandschlauch mit der Sandtreppe verbundenes und vor einem antreib- und/ oder abbremsbaren Schienenrad mündendes Sandauslaufrohr. Der zwischen Schienenrad und Fahrschiene eingebrachte Streusand sorgt für einen optimalen Reibwert beim Anfahren, Bremsen und während der Fahrt des Schienenfahrzeugs. Sandstreuanlagen mit Sandtreppen sind seit langem bewährt.

Eine Sandstreuanlagen mit einem Filter ist aus der deutschen Offenlegungsschrift DE 29 38 583 A1 bekannt.

Weitere Sandstreuanlagen sind in den Druckschriften EP 0 499 199 A2, DE 103 05 551 A1, WO 2004/080778 A1, DE 1 279 057 A und DE 26 17 331 C3 offenbart.

Die Funktion einer Sandstreuanlage mit Sandtreppe kann bei bestimmten Umgebungsbedingungen, wie etwa Feuchtigkeit, Nässe und/oder Frost, stark beeinträchtigt werden, wodurch ein effektiver Betrieb des Schienenfahrzeugs gefährdet ist.

Der Erfindung liegt die Aufgabe zugrunde, eine Sandstreuanlage für ein Schienenfahrzeug bereitzustellen, welche auch bei widrigen Umgebungsbedingungen funktioniert und damit einen effektiven Betrieb des Schienenfahrzeugs ermöglicht.

Die Aufgabe wird erfindungsgemäß gelöst durch eine Sandstreuanlage der eingangs genannten Art mit den im kennzeichnenden Teil des Patentanspruches 1 angegebenen Merkmalen. Demnach ist in die Sandtreppe eine Wärmeeinrichtung zur Erzeugung eines Streusand durchströmenden Warmluftstromes integriert. Durch Integration einer Wärmeeinrichtung in die Sandtreppe kann Streusand, der aufgrund von Nässe oder Eis verklumpt und/oder gefroren ist, durch einen Warmluftstrom erwärmt und getrocknet werden. Hierdurch kann auch bei schlechten Wetterbedingungen rieselfähiger Streusand bereitgehalten werden, um beim Betreib des Schienenfahrzeugs jederzeit bedarfsgerecht sanden zu können. Indem die Wärmeeinrichtung in die Sandtreppe integriert ist, entfallen Herstellungs- und Montageschritte für eine gegebenenfalls separate Heizeinrichtung. Die Wärmeeinrichtung kann eine oder mehrere Wärmequellen aufweisen, die je nach Gestaltung an unterschiedlichen Stellen in die Sandtreppe eingebaut werden können, um eine effektive Trocknung des Streusandes zu bewirken. An wenigstens einem Auslass ist ein Sinterfilter angeordnet, durch den der Warmluftstrom in den Sandkasten strömt. Der poröse Sinterwerkstoff des Sinterfilters ist durchlässig für den erzeugten Warmluftstrom, aber vorzugsweise nicht für Streusandpartikel, so dass ein Verstopfen des Auslasses durch Streusand aus dem Sandkasten verhindert wird.

Bei der erfindungsgemäßen Sandstreuanlage weist die Sandtreppe ein Treppengehäuse mit einem Befestigungsflansch zu deren Befestigung am Sandkasten auf, wobei sich im Befestigungsflansch ein Kanalsystem zur Aufnahme der Wärmeeinrichtung und zur Führung eines die Wärmeeinrichtung passierenden Luftstromes erstreckt. Das Kanalsystem kann beispielsweise durch ein System strömungstechnisch verbundener Quer- und Längskanäle gebildet sein, die fertigungstechnisch einfach herstellbar, in dem die Wärmeeinrichtung angeordnet und der Luft zur Erzeugung des Warmluftstromes geführt werden kann.

Vorzugsweise weist das Kanalsystem der erfindungsgemäßen Sandstreuanlage ein oder mehrere Anschlussöffnungen auf, durch die jeweils ein stabförmiges Wärmeelement der Wärmeeinrichtung von außen einführbar ist. Die Wärmeeinrichtung kann je nach Wärmebedarf ein oder mehrere, stabförmige Wärmeelemente aufweisen, die durch Anschlussöffnungen in das Kanalsystem von außen einführbar sind. Die Anschlussöffnungen sind derart an Seitenflächen des Befestigungsflansches vorgesehen, dass bei an den Sandkasten angeflanschter Sandtreppe ein Bestücken beziehungsweise Austauschen von Wärmeelementen problemlos möglich ist. Hierdurch wird die Wartungsfreundlichkeit der erfindungsgemäßen Sandstreuanlage verbessert.

In einer bevorzugten Ausgestaltung der erfindungsgemäßen Sandstreuanlage weist das Kanalsystem einen oder mehrere Einlässe für einen Versorgungsluftstrom und einen oder mehrere Auslässe für einen Warmluftstrom auf. An den Einlässen, die vorzugsweise ebenfalls an den leicht zugänglichen Seitenflächen des Befestigungsflansches angeordnet sind, können eine oder mehrere Druckluftleitungen zur Zuführung eines Versorgungsluftstromes angeschlossen werden. Der Versorgungsluftstrom wird durch das Kanalsystem zu dem oder den Wärmeelementen geführt, um bei deren Passage erhitzt zu werden. Der so erzeugte Warmluftstrom verlässt dann die Sandtreppe durch Auslässe des Kanalsystems, die beispielsweise in einer nach oben weisenden Flanschfläche des Befestigungsflansches angeordnet sein können. Der in den Sandkasten aufsteigende Warmluftstrom durchsetzt auf diese Weise den nach unten nachrutschenden Streusand, wodurch eine besonders effektive Sandtrocknung im Gegenstrombetrieb erreicht wird.

Vorzugsweise ist der Versorgungsluftstrom unabhängig von einem der Sandtreppe der erfindungsgemäßen Sandstreuanlage zur Dosierung des Streusandaustritts zuführbaren Druckluftstrom steuerbar. Indem Druck und Volumenstrom des Versorgungsluftstroms für die Wärmeeinrichtung getrennt einstellbar ist, kann die Wärmemenge bedarfsgerecht und unabhängig von der benötigten Streusandmenge bereitgestellt werden. Diese Möglichkeit entfällt, wenn der Warmluftstrom identisch mit dem zur Dosierung des Streusandaustritts zugeführten Druckluftstrom wäre.

Vorzugsweise ist der Sinterfilter kegelstumpfförmig ausgebildet und ragt vom Befestigungsflansch in den Sandkasten. Durch die kegelförmige Ausbildung des Sinterfilters wird eine große, in den Sandkasten hineinragende Filterfläche gebildet, so dass der austretende Warmluftstrom eine große Schichtdicke von über der Flanschfläche liegendem Streusand durchdringt.

In einer vorteilhaften Ausführungsform der erfindungsgemäßen Sandstreuanlage ist das Treppengehäuse einstückig ausgebildet, beispielsweise durch ein Gießverfahren oder ein 3D-Druckverfahren wie Laser- oder Elektronenstrahlschmelzen hergestellt. Ein Gussteil ist für eine Sandtreppe mit ihrer komplexen äußeren und inneren, den Sandweg bildenden Form einerseits einfach herstellbar und andererseits ein guter Wärmeleiter für die von der integrierten Wärmeeinrichtung abgegebenen Wärmeenergie. Durch die Einstückigkeit werden Wärmebarrieren in der Sandtreppe vermieden, wodurch die Wärmeenergie sich gut im Treppengehäuse verteilt und damit zu einer effektiven Trocknung auch des in der Mulde des Treppengehäuses befindlichen Streusandes beiträgt.

Ein Schienenfahrzeug, insbesondere eine Lokomotive oder ein Triebzug, welches wenigstens ein antreib- und/oder abbremsbares Schienenrad aufweist, ist erfindungsgemäß mit einer Sandstreuanlage nach einem der Ansprüche 1 bis 6 ausgerüstet. Hierdurch können Antriebs- und Bremsvorgänge auch bei ungünstigen, durch Feuchtigkeit und niedrige Temperaturen gekennzeichnete Wetterbedingungen effektiv durchgeführt werden. Weitere Eigenschaften und Vorteile der Erfindung ergeben sich aus nachfolgender Beschreibung der Zeichnungen, in deren
- FIG 1: eine erfindungsgemäße Sandungsanlage mit Sandtreppe in teilweise geschnittener Seitenansicht,
- FIG 2: ein Schnitt durch den Befestigungsflansch der Sandtreppe entlang der in FIG 1 angedeuteten Schnittlinie II-II,
- FIG 3: die Sandungsanlage gemäß FIG 1 in Draufsicht und
- FIG 4: ein Längsschnitt durch den Befestigungsflansch der Sandtreppe entlang der in FIG 3 angedeuteten Schnittlinie IV-IV
schematisch veranschaulicht sind.

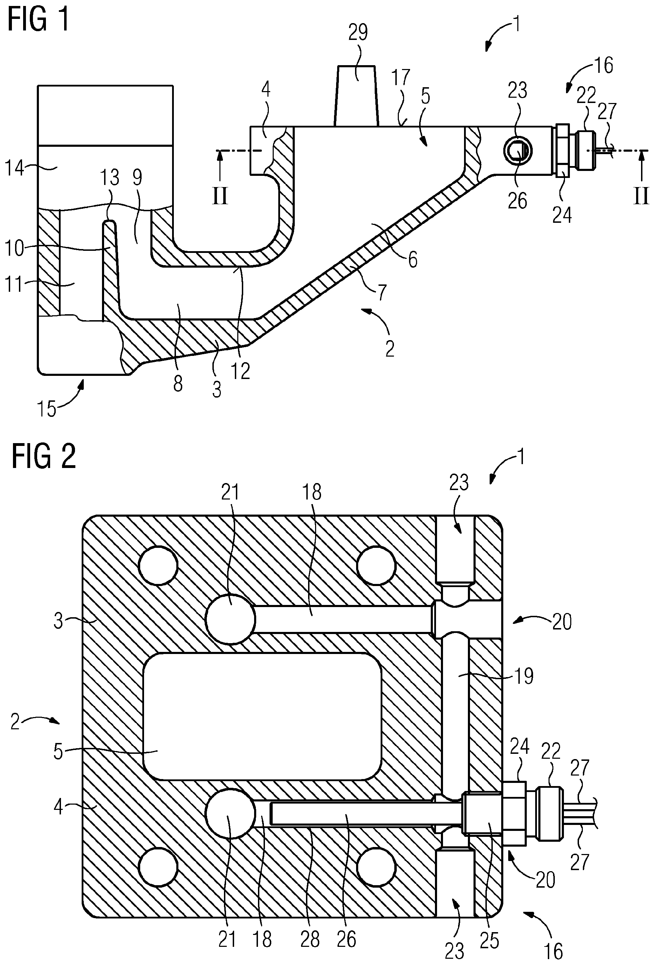

Gemäß FIG 1 umfasst eine Sandstreuanlage 1 für ein nicht dargestelltes Schienenfahrzeug, beispielsweise eine Lokomotive, mit antreib- und/oder abbremsbaren Schienenrädern einen ebenfalls nicht dargestellten Sandkasten zur Bevorratung von Streusand. Unterhalb des Sandkastens ist eine Sandtreppe 2 zur druckluftgesteuerten Dosierung des Streusandaustritts befestigt. Die Sandtreppe 2 ist über einen nicht dargestellten Sandschlauch mit einem in Fahrtrichtung vor dem Schienenrad mündenden Sandauslaufrohr, welches ebenfalls nicht dargestellt ist, verbunden. Die nicht dargestellten Teile sind an sich bekannt. Die Sandtreppe 2 weist ein als einstückiges Gussteil ausgebildetes Treppengehäuse 3 auf, durch das ein syphonartiger, im Wesentlichen S-förmiger Sandweg verläuft. Das Treppengehäuse 3 weist einen Befestigungsflansch 4 zu dessen Befestigung am Sandkasten auf. Streusand tritt aus dem Sandkasten durch eine im Befestigungsflansch 4 vorgesehene Sandeintrittsöffnung 5 ein und rutscht in eine sich an diese anschließende, trichterförmige Mulde 6 des Treppengehäuses 3. Die Bodenwand 7 der Mulde 6 weist zweckmäßigerweise einen Neigungswinkel auf, der im Vergleich zum Schüttwinkel des verwendeten Streusandes ein Nachrutschen begünstigt. An die Mulde 6 schließt sich ein horizontales, relativ enges Kanalstück 8 an, welches als Drosselstelle für den nachrutschenden Streusand wirkt. Hierdurch wird vermieden, dass bei Erschütterungen des Schienenfahrzeugs übermäßig viel Streusand aus dem Sandkasten nachrutscht. Das Kanalstück 8 mündet in einen Sandraum 9, der durch eine vertikale Trennwand 10 von einem Ausblaskanal 11 des Treppengehäuses 3 getrennt ist. Dabei liegt ein Scheitel 12 des Kanalstückes 8 unterhalb einer Oberkante 13 der Trennwand 10 und damit unterhalb einer Eintrittsöffnung des sich von dieser vertikal nach unten erstreckenden Ausblaskanals 11. Oberhalb des Ausblaskanals 11 und des Sandraums 9 wird von oben über einen zwei Düsen 30, 31 aufweisenden Düsenstock 14 des Treppengehäuses 3 Druckluft zugeführt. Aus einer ersten Düse 30 strömt ein Luftstrahl in den Sandraum 9, so dass dort Streusand aufgewirbelt wird. Der aufgewirbelte Streusand wird von dem aus der zweiten Düse 31 ausströmenden Luftstrahl mitgerissen und durch den Ausblaskanal 11 befördert, den er durch eine Sandaustrittsöffnung 15 des Treppengehäuses 3 verlässt. An die Sandaustrittsöffnung 15 ist der mit dem Sandauslaufrohr endende Sandschlauch angeschlossen, aus welchem der Spalt zwischen Schienenrad und Fahrschiene zur Reibwerterhöhung mit Streusand bestrahlt wird.

Gemäß FIG 1 bis FIG 4 ist in die Sandtreppe 2 nach der vorliegenden Erfindung eine Wärmeeinrichtung 16 zur Erzeugung eines Streusandes durchströmenden Warmluftstromes integriert. Hierdurch wird der Streusand getrocknet und rieselfähig gehalten. Durch Integration der Wärmeeinrichtung 16 in die Sandtreppe 2 werden zusätzliche Bauteile und damit einhergehende Herstellungs- und Montagekosten eingespart. Zur Integration der Wärmeeinrichtung 16 erstreckt sich im Befestigungsflansch 4 des Treppengehäuses 3 ein Kanalsystem zur Aufnahme der Wärmeeinrichtung 16 und zur Führung eines die Wärmeeinrichtung 16 passierenden Luftstromes.

Gemäß FIG 2 verläuft das Kanalsystem parallel zu einer etwa quadratischen Flanschfläche 17 des Befestigungsflansches 4 und weist zwei parallele Längskanäle 18 sowie senkrecht hierzu einen die Längskanäle 18 kreuzenden Querkanal 19 auf, wodurch ein kommunizierendes Kanalsystem gebildet ist. Jeder der Längskanäle 18 verläuft von einer seitlichen Anschlussöffnung 20 in den Befestigungsflansch 4 hinein und mündet in je ein beiderseits der rechteckförmigen Sandeintrittsöffnung 5 liegendes Sackloch, welches zur Flanschfläche 7 hin offen ist und einen Auslass 21 bildet. Durch eine Anschlussöffnung 19 ist ein stabförmiges Wärmeelement 22 der Wärmeeinrichtung 16 von außen in den Längskanal 18 eingeführt und über eine Schraubverbindung befestigt. Die Anschlussöffnung 20 des anderen Längskanals 18 ist je nach erforderlicher Wärmemenge für die Streusandtrocknung entweder durch ein nicht dargestelltes Abschlussstück verschließbar oder mit einem ebenfalls nicht dargestellten, zweiten stabförmigen Wärmeelement 22 bestückbar. Zum druckluftdichten Abschluss der Anschlussöffnungen 20 weisen die Längskanäle 18 Innengewindeansätze für die Schraubverbindungen auf. Der Querkanal 19 ist als Durchgangsloch ausgebildet und weist an gegenüberliegenden Stirnflächen des Befestigungsflansches 4 je einen Einlass 23 auf, an welchen eine nicht dargestellte Druckluftleitung zur Zuführung eines Versorgungsluftstromes anschließbar ist. Wird ein größerer Versorgungsluftstrom zur Streusandtrocknung benötigt, beispielsweise wenn beide Längskanäle 18 mit Wärmeelementen 22 bestückt sind, können Druckluftleitungen an beiden Einlässen 23 angeschlossen sein. Andernfalls wird der nicht für eine Druckluftleitung benötigte Einlass 23 durch ein Abschlussstück druckluftdicht verschlossen. Ein besonderer Vorteil liegt in der Trennung des über die Druckluftleitungen bereitgestellten Versorgungsluftstroms von dem zur Dosierung des Streusandaustritts zugeführten Druckluftstrom, so dass ersterer unabhängig vom Streusandbedarf nur nach dem aktuellen Wärmebedarf steuerbar ist.

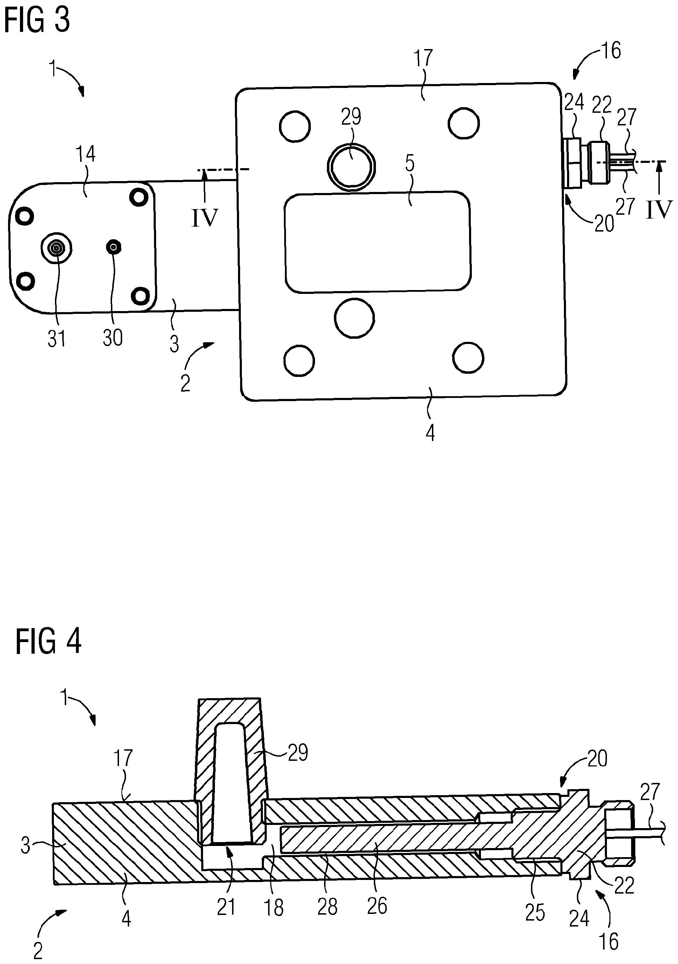

Gemäß FIG 4 umfasst ein Wärmeelement 22 einen Außensechskantabschnitt 24 zum Ansetzen eines Befestigungswerkzeugs, einen daran anschließenden Außengewindeabschnitt 25 zur Verschraubung mit dem Innengewindeansatz des Längskanals 18 und einen sich an diesen anschließenden Heizstab 26, der sich durch den Längskanal 18 bis fast zum Auslass 21 hin erstreckt. Der Heizstab 26 wandelt elektrische Energie, die durch stirnseitig von außen angeschlossene Versorgungsleitungen 27 zugeführt wird, in Wärmeenergie um. Von dem oder den seitlichen Einlässen 23 fließt ein Versorgungsluftstrom durch den Querkanal 19 weiter in die Längskanäle 18 durch einen den Heizstab 26 umgebenden Ringspalt 28. Dabei erwärmt sich die am Heizstab 26 vorbeiströmende Luft und bildet ein Warmluftstrom, der durch den Auslass 21 in den zu trocknenden Streusand fließt. Am Auslass 21 ist ein Sinterfilter 29 angeordnet, der für den Warmluftstrom durchlässig ist, nicht aber für Streusand zur Vermeidung einer Verstopfung des Auslasses 21. Der in den Auslass 21 eingeschraubte Sinterfilter 29 ist kegelstumpfförmig ausgebildet und ragt von der Flanschfläche 17 des Befestigungsflanschs 4 nach oben in den Sandkasten. Die den oder die Sinterfilter 29 verlassende Warmluftstrom durchströmt nach oben den nach unten nachrutschenden Streusand im Sandkasten. Durch dieses Gegenstromprinzip wird eine besonders effektive Trocknung des Streusandes erzielt. Zusätzlich wird durch die länglichen Heizstäbe 26 der Befestigungsflansch 4 aufgeheizt, der zusätzlich Wärme an den nachrutschenden Streusand abgibt. Durch die Einstückigkeit des als Gussteil oder 3D-Druckteil ausgebildeten Treppengehäuses 3 wird dieses durch Wärmeleitung auch im Bereich der Mulde 6 aufgeheizt, so dass auch der darin befindliche Streusand getrocknet wird.

## Patentansprüche

1. Sandstreuanlage (1) für ein Schienenfahrzeug mit antreib- und/oder abbremsbaren Schienenrädern, umfassend einen Sandkasten zur Bevorratung von Streusand, eine am Sandkasten befestigte Sandtreppe (2) zur druckluftgesteuerten Dosierung des Streusandaustritts, und ein über einen Sandschlauch mit der Sandtreppe (3) verbundenes und vor einem Schienenrad mündendes Sandauslaufrohr, wobei in die Sandtreppe (2) eine Wärmeeinrichtung (16) zur Erzeugung eines Streusand durchströmenden Warmluftstromes integriert ist,
**dadurch gekennzeichnet, dass**
- die Sandtreppe (2) ein Treppengehäuse (3) mit einem Befestigungsflansch (4) zu deren Befestigung am Sandkasten aufweist,
- sich im Befestigungsflansch (4) ein Kanalsystem zur Aufnahme der Wärmeeinrichtung (16) und zur Führung eines die Wärmeeinrichtung (16) passierenden Luftstromes erstreckt, und
- an wenigstens einem Auslass (21) des Kanalsystems ein Sinterfilter (29) angeordnet ist, durch den der Warmluftstrom in den Sandkasten strömt.

2. Sandstreuanlage (1) nach Anspruch 1, wobei das Kanalsystem ein oder mehrere Anschlussöffnungen (20) aufweist, durch die jeweils ein stabförmiges Wärmeelement (22) der Wärmeeinrichtung (16) von außen einführbar ist.

3. Sandstreuanlage (1) nach einem der voranstehenden Ansprüche, wobei das Kanalsystem einen oder mehrere Einlässe (23) für einen Versorgungsluftstrom aufweist.

4. Sandstreuanlage (1) nach Anspruch 3, wobei der Versorgungsluftstrom unabhängig von einem der Sandtreppe (2) zur Dosierung des Streusandaustritts zuführbaren Druckluftstrom steuerbar ist.

5. Sandstreuanlage (1) nach Anspruch 4, wobei der Sinterfilter (29) kegelstumpfförmig ausgebildet ist und vom Befestigungsflansch (4) in den Sandkasten ragt.

6. Sandstreuanlage (1) nach einem der Ansprüche 2 bis 5, wobei das Treppengehäuse (3) einstückig ausgebildet ist.

7. Schienenfahrzeug, insbesondere Lokomotive, mit wenigstens einem antreib- und/oder abbremsbaren Schienenrad und einer Sandstreuanlage (1) nach einem der Ansprüche 1 bis 6.

## Claims

1. Sand spreading system (1) for a rail vehicle with rail wheels which can be driven and/or braked, comprising a sandbox for storing spreading sand, a sand stairway (2) which is fastened to the sandbox and which serves for the compressed-air-controlled metering of the output of spreading sand, and a sand outlet tube which is connected to the sand stairway (3) via a sand hose and which opens out in front of a rail wheel, wherein a heating device (16) for generating a hot air stream which flows through spreading sand is integrated into the sand stairway (2),
**characterized in that**
- the sand stairway (2) has a stairway housing (3) with a fastening flange (4) for the fastening thereof to the sandbox,
- in the fastening flange (4) there extends a channel system for accommodating the heating device (16) and for conducting an air stream which passes through the heating device (16), and
- at at least one outlet (21) of the channel system there is arranged a sintered filter (29) through which the hot air stream flows into the sandbox.

2. Sand spreading system (1) according to Claim 1, wherein the channel system has one or more port openings (20) through which in each case one rod-shaped heating element (22) of the heating device (16) can be inserted from the outside.

3. Sand spreading system (1) according to any of the preceding claims, wherein the channel system has one or more inlets (23) for a supply air stream.

4. Sand spreading system (1) according to Claim 3, wherein the supply air stream is controllable independently of a compressed air stream that can be fed to the sand stairway (2) for the metering of the output of spreading sand.

5. Sand spreading system (1) according to Claim 4, wherein the sintered filter (29) is of frustoconical form and projects from the fastening flange (4) into the sandbox.

6. Sand spreading system (1) according to any of Claims 2 to 5, wherein the stairway housing (3) is formed as a single piece.

7. Rail vehicle, in particular locomotive, having at least one rail wheel which can be driven and/or braked, and having a sand spreading system (1) according to any of Claims 1 to 6.

## Revendications

1. Dispositif de sablage (1) pour un véhicule ferroviaire équipé de roues ferroviaires susceptibles d'être entraînées et/ou freinées, comportant une sablière pour le stockage du sable, une descente de sablière (2) rapportée à la sablière pour le dosage du sable commandé par de l'air comprimé, ainsi qu'un tube de sortie du sable relié à la descente de sablière (3) par un flexible de sable et débouchant devant une roue ferroviaire, la descente de sablière (2) abritant un dispositif de chauffage (16) pour générer un courant d'air chaud traversant le sable,
**caractérisé en ce que**
la descente de sablière (2) comporte une carcasse de descente (3) équipée d'une bride de fixation (4) pour fixer la descente à la sablière,
un système de canaux s'étend dans la bride de fixation (4) pour loger le dispositif de chauffage (16) et pour véhiculer un courant d'air passant à travers le dispositif de chauffage (16), et
un filtre fritté (29) est disposé à au moins une sortie (21) du système de canaux, par lequel le courant d'air chaud s'écoule dans la sablière.

2. Dispositif de sablage (1) selon la revendication 1, dans lequel le système de canaux comporte une ou plusieurs ouvertures de raccordement (20) à travers lesquelles un élément de chauffage (22) chacun en forme de barre du dispositif de chauffage (16) peut être introduit depuis l'extérieur.

3. Dispositif de sablage (1) selon l'une des revendications précédentes, dans lequel le système des canaux comporte une ou plusieurs entrées (23) d'un courant d'air d'alimentation.

4. Dispositif de sablage (1) selon la revendication 3, dans lequel le courant d'air d'alimentation est réglable indépendamment d'un courant d'air comprimé susceptible d'être alimenté à la descente de sablière (2) pour doser la distribution du sable.

5. Dispositif de sablage (1) selon la revendication 4, dans lequel le filtre fritté (29) est prévu sous forme tronconique et s'étend depuis la bride de fixation (4) dans la sablière.

6. Dispositif de sablage (1) selon l'une des revendications 2 à 5, dans lequel la carcasse de descente (3) est prévue sous forme monobloc.

7. Véhicule ferroviaire, notamment locomotive, comportant au moins une roue ferroviaire susceptible d'être entraînée et/ou freinée et un dispositif de sablage (1) selon l'une des revendications 1 à 6.
